(19) Europäisches Patentamt / European Patent Office / Office européen des brevets

(11) **EP 2 727 253 B1**

(12) **FASCICULE DE BREVET EUROPEEN**

(45) Date de publication et mention de la délivrance du brevet:
**02.01.2019 Bulletin 2019/01**

(21) Numéro de dépôt: **12743486.8**

(22) Date de dépôt: **29.06.2012**

(51) Int Cl.:
$H04B\ 1/7163^{(2011.01)}$    $H04B\ 1/717^{(2011.01)}$
$H04L\ 25/49^{(2006.01)}$    $H04L\ 25/493^{(2006.01)}$
$H04L\ 29/06^{(2006.01)}$    $H04B\ 14/02^{(2006.01)}$
$H04J\ 13/00^{(2011.01)}$

(86) Numéro de dépôt international:
**PCT/FR2012/051514**

(87) Numéro de publication internationale:
**WO 2013/001248 (03.01.2013 Gazette 2013/01)**

(54) **PROCÉDÉ DE TRAITEMENT D'UN PAQUET DE DONNÉES AVANT SON ÉMISSION DANS UN RÉSEAU DE COMMUNICATION PAR RADIO, PROCÉDÉ DE TRAITEMENT D'UN PAQUET DE DONNÉES REÇU, DISPOSITIFS ET SYSTÈMES ASSOCIÉS**

VERFAHREN ZUR VERARBEITUNG VON DATENPACKETEN VOR UND NACH DEREN ÜBERTRAGUNG, FUNKÜBERTRAGUNGSNETZWERK UND ZUGEHÖRIGE VORRICHTUNGEN

METHOD OF PROCESSING DATA PACKET PRIOR TO TRANSMISSION, RADIO COMMUNICATION NETWORK, METHOD OF PROCESSING RECEIVED DATA PACKET AND CORRESPONDING SYSTEMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2011 FR 1155911**

(43) Date de publication de la demande:
**07.05.2014 Bulletin 2014/19**

(73) Titulaires:
 • **Orange**
  **75015 Paris (FR)**
 • **INRIA - Institut National de Recherche en Informatique et en Automatique**
  **78153 Le Chesnay Cedex (FR)**

(72) Inventeurs:
 • **BENFARAH, Ahmed**
  **F-38100 Grenoble (FR)**
 • **LAURADOUX, Cédric**
  **38000 Grenoble (FR)**
 • **MISCOPEIN, Benoît**
  **F-38000 Grenoble (FR)**

(74) Mandataire: **Delumeau, François Guy et al**
 **Cabinet Beau de Loménie**
 **158, rue de l'Université**
 **75007 Paris (FR)**

(56) Documents cités:
 **US-A1- 2008 012 688**

 • **P. YU, P. SCHAUMONT, AND D. HA: "Securing RFID with Ultra-Wideband Modulation", WORKSHOP ON RFID SECURITY - RFIDSEC 2006; GRAZ 2006, 12 juillet 2006 (2006-07-12), - 14 juillet 2006 (2006-07-14), XP002668852, Austria**
 • **MIYONG KO ET AL: "Wireless physical-layer security performance of UWB systems", IEEE MILITARY COMMUNICATIONS CONFERENCE - MILCOM 2010, 31 octobre 2010 (2010-10-31), pages 2143-2148, XP031844062, NJ, USA ISBN: 978-1-4244-8178-1**
 • **HA D S ET AL: "Replacing Cryptography with Ultra Wideband (UWB) Modulation in Secure RFID", IEEE INTERNATIONAL CONFERENCE ON RFID, 2007, 1 janvier 2007 (2007-01-01), pages 23-29, XP031174002, NY, USA ISBN: 978-1-4244-1012-5**

- JIAN LAO ET AL: "A novel Chaotic Stream DS-UWB system", IEEE INTERNATIONAL JOINT CONFERENCE ON NEURAL NETWORKS, 1 juin 2008 (2008-06-01), pages 835-839, XP031327630, NJ, USA ISBN: 978-1-4244-1820-6
- CHUNYAN HAN ET AL: "A novel multi-address chaotic sequence for TH-PPM-UWB system", IEEE INTERNATIONAL CONFERENCE ON COMMUNICATIONS, CIRCUITS AND SYSTEMS - ICCCAS 2010, 28 juillet 2010 (2010-07-28), pages 764-768, XP031760545, NJ, USA ISBN: 978-1-4244-8224-5

**Description**

## 1. Domaine de l'invention

Le domaine de l'invention est celui des télécommunications, et plus particulièrement celui d'un réseau de communication par paquets, mettant en oeuvre une technique de communication par voie radio impulsionnelle basée sur l'utilisation d'un code de saut temporel (« Time Hopping », en anglais), telle que par exemple une technique Ultra Large Bande (« Ultra Wide Band », en anglais). Le domaine de l'invention est de la même manière celui d'un réseau de communication par paquets, mettant en oeuvre une technique de communication par voie radio à étalement de spectre par saut de fréquence (« Frequency Hopping spread spectrum », ou FH-SS, en anglais), basée sur l'utilisation d'un code de saut fréquentiel.

La présente invention concerne un procédé de traitement d'un paquet de données avant son émission par un équipement noeud d'un tel réseau. L'invention concerne aussi un dispositif de traitement mettant en oeuvre un tel procédé.

L'invention concerne en outre un procédé de traitement d'un tel paquet de données reçu par un équipement noeud d'un tel réseau. Elle concerne aussi un dispositif de traitement mettant en oeuvre ce procédé.

L'invention concerne encore un équipement noeud comprenant de tels dispositifs. Elle concerne enfin un système de communication comprenant une pluralité de tels équipements.

L'invention s'applique de manière particulièrement avantageuse à la protection des systèmes de communication sans fil, notamment contre des attaques de type écoute (« eavesdropping », en anglais) ou brouillage (« jamming », en anglais).

## 2. Inconvénients de l'art antérieur

On considère plus particulièrement les communications UWB impulsionnelle, qui consistent à transmettre l'information au moyen d'impulsions à très courte durée et à rapport cyclique très faible, induisant une puissance moyenne très réduite.

Par la nature du lien radio dans un réseau de communication sans fil, il est relativement facile d'intercepter la communication par une tierce partie malveillante et ainsi menacer la confidentialité de l'information entre l'émetteur et le destinataire légitime.

Par conséquent, un tel réseau sans fil peut être sujet à au moins deux types d'attaque :

- L'accès au contenu des messages échangés, par une écoute indiscrète (« eavesdropping », en anglais) ;
- Le déni de service (« Denial of Service », en anglais) au moyen du brouillage.

Selon l'état de l'art, l'émission de données par voie radio impulsionnelle se fait au moyen d'un code de saut temporel dont la fonction première est d'éviter les raies spectrales dues à l'émission périodique des impulsions.

Selon une première technique connue, par exemple décrite dans le document intitulé "Multiple access with time-hopping impulse modulation," par Scholtz, R. publié dans les proceedings de la conférence « Military Communications Conférence », en 1993, MILCOM '93, Conférence record 'Communications on the Move'., IEEE, vol.2, no., pp.447-450 vol.2, 11-14 Oct 1993, l'émission d'une impulsion est décalée par rapport à la précédente d'un certain nombre d'intervalles temporels élémentaires (« slots », en anglais), ce nombre étant donné par un code périodique. Par exemple, un symbole est transmis dans un temps symbole par 8 impulsions à des instants temporels décalés les uns par rapport aux autres, selon un code de saut de la forme [8, 2, 6, 5, 3, 4, 7, 1].

Selon une deuxième technique connue et spécifiée dans la norme IEEE 802.15.4-2007, les impulsions ne sont plus transmises de façon isolée, mais regroupées en groupements (« bursts », en anglais) d'impulsions émises en une seule fois dans le temps symbole.

Selon une troisième technique connue, par exemple décrite dans le document intitulé "Securing RFID with Ultra-wideband Modulation" par Pengyuan Yu et al., publié pendant un "workshop on RFID security - RFIDSEC 2006" en 12-14 Jul 2006, une communication RFID est sécurisée en utilisant une modulation de type Ultra Wide Band (UWB).

Selon une quatrième technique connue, par exemple décrite dans le brevet US 2008/012688, un modèle de signalisation UWB basée sur l'utilisation de codes de saut temporels augmente la sécurité des transmissions de données.

La modulation fondamentale est de type modulation par position (« Pulse Position Modulation » ou PPM, en anglais). L'émission du burst se fait dans la première ou la seconde moitié du temps symbole, selon la valeur du bit à coder. Chaque demi-temps symbole est lui-même découpé en deux moitiés. La deuxième n'est pas utilisée pour la transmission, afin de laisser un temps de garde entre deux bursts consécutifs et limiter ainsi les risques d'interférences entre symboles. Un burst peut donc être émis dans le premier ou le troisième quart du temps symbole. L'instant temporel d'émission dans un de ces deux quarts est défini par un code de saut temporel.

Avec ces deux techniques de l'art antérieur, l'émission d'une impulsion ou d'un burst sur le lien radio du réseau est donc gouvernée par un code de saut temporel périodique. Cette périodicité rend le lien vulnérable aux attaques de type « eavesdropping ».

En effet, un noeud malicieux peut écouter le canal et réussir à apprendre la séquence du code de saut périodique utilisé. Connaissant la séquence du code de saut utilisé pour la transmission, un attaquant peut ensuite facilement prédire les instants d'émission des impulsions. Un tel attaquant peut donc démoduler le paquet de données intercepté ce qui constitue une atteinte à la confidentialité.

La connaissance de ce code de saut permet aussi de mettre en oeuvre une attaque efficace de type brouillage en émettant des impulsions parasites exactement aux instants d'émission des impulsions par le noeud légitime, pour créer une interférence de nature à empêcher le noeud récepteur légitime de démoduler correctement le paquet qu'il reçoit.

Les codes de saut temporel proposés actuellement dans la littérature présentent donc des vulnérabilités sérieuses en terme de sécurité.

Dans le cas fréquentiel, l'étalement de spectre par saut de fréquence utilise une séquence pseudo-aléatoire sélectionnant une des sous-bandes de fréquences disponibles pour la transmission à un instant donné. Le rythme de changement de la sous-bande peut être un multiple ou un sous-multiple du débit binaire du paquet de données à transmettre.

Le même problème de sécurité se pose dans le cas des communications radio à saut de fréquence basées sur l'utilisation d'un code de saut fréquentiel. En effet, la connaissance de la séquence de saut par un noeud malicieux permet à ce dernier d'écouter la succession des sous-bandes utilisées par l'émetteur pour avoir accès à l'information transmise ; elle lui permet aussi de brouiller efficacement la transmission en émettant sur les sous-bandes définies par le code de saut fréquentiel.

Il existe donc un besoin d'une solution pour mieux protéger les communications entre noeuds d'un réseau de communication par voie radio impulsionnelle ou fréquentielle contre des attaques menées par des équipements noeuds malicieux.

### 3. Exposé de l'invention

L'invention vient améliorer la situation à l'aide d'un procédé de traitement d'un paquet de données avant son émission dans un réseau de communication radio par une succession de formes d'ondes émises à des positions définies par des codes de sauts, lesdites position pouvant être temporelles ou fréquentielles, le paquet étant émis sur un canal de communication du réseau par un équipement noeud émetteur à destination d'un équipement noeud récepteur. Selon l'invention, le procédé comprend les étapes suivantes, mises en oeuvre pour chaque bit du paquet de données à transmettre, dit bit courant :

- calcul d'un code de saut au moins en fonction de la valeur du bit courant et d'une clé de chiffrement générée à partir d'un générateur pseudo-aléatoire, la clé de chiffrement ayant une taille supérieure à la taille maximale d'un paquet de données transmis sur le canal ;

- commande d'émission d'une forme d'onde à la position définie par le code de saut calculé, la forme d'onde émise étant identique, quelle que soit la valeur du bit courant.

L'invention s'applique aussi bien à des communications radio basées sur des codes de saut temporels que sur des codes de saut fréquentiels.

Dans le cas d'une communication radio impulsionnelle, le code de saut est temporel et il définit un instant d'émission d'un groupement d'impulsions. Dans le cas d'une communication radio fréquentielle, le code de saut est fréquentiel et définit une sous-bande de fréquence d'émission parmi toute la bande disponible.

Avec l'invention, le code de saut utilisé pour la transmission des données du paquet est calculé au moins en fonction du bit d'information et d'une clé de chiffrement (« keystream » en anglais) dont la taille est supérieure à une taille maximale d'un paquet de données transmis sur le canal de communication.

Contrairement à l'art antérieur, le code de saut calculé présente une période suffisamment longue, du fait de sa dépendance à la valeur du bit à transmettre et de l'utilisation d'une clé de chiffrement de taille importante, pour ne plus pouvoir être déduit d'une écoute même prolongée du canal de transmission.

De plus, avec l'invention, et contrairement à l'art antérieur, la forme d'onde émise à la position définie par le code de saut est identique, quelle que soit la valeur du bit courant.

Ainsi, avec l'invention, un attaquant malicieux qui écoute le canal de transmission, verra passer une succession de formes d'ondes identiques, positionnées à des instants ou respectivement des fréquences d'émissions non prédictibles, du fait des propriétés de sécurité de la clé de chiffrement.

Dans le cas d'une communication par radio impulsionnelle par exemple, le temps symbole est divisé en un certain nombre de slots. C'est donc un groupement ou burst d'impulsions non modulé qui est émis sur le canal de transmission sur le slot correspondant à l'instant temporel défini par le code de saut temporel calculé selon l'invention.

Avec l'invention, il sera donc beaucoup plus difficile pour l'attaquant, de prédire les instants d'émission des prochains bursts et donc de mener les attaques de type « eavesdropping » et « jamming » efficacement.

L'invention propose donc une solution au problème de la protection des réseaux de communication par voie radio impulsionnelle ou saut-fréquentiel contre des attaques de noeuds malicieux.

Selon un aspect de l'invention, le nombre de positions possibles pour la forme d'onde étant égal à $2^p$, avec p entier non nul, ledit procédé comprend une étape préalable de mise en correspondance du bit courant avec un mot de code de p bits, selon une table de correspondance partagée avec l'équipement noeud destinataire, et l'étape de calcul comprend une addition bit à bit de type « ou exclusif » du mot de code correspondant au bit à transmettre et de la clé de chiffrement, de même longueur p que le mot de code du bit courant, dont le résultat correspond au code de saut calculé.

Le rôle de l'étape de mise en correspondance est d'associer à 1 bit d'information un mot de p bits. Il est avantageux de travailler avec un bloc de p bits lorsque le temps symbole comprend $2^p$ slots.

Dans le cas d'un système de communication par voie radio impulsionnelle, on notera qu'une valeur pratique de 4 ou 5 pourra être choisie pour p, ce qui correspond à $2^4$=16 respectivement $2^5$=32 slots. Un tel ordre de grandeur présente l'avantage d'être conforme avec les ordres de grandeur classiques d'une couche physique dans le cas d'une communication UWB.

Dans le cas d'un système à saut-fréquentiel, un ordre de grandeur pratique est de 64 à 128 sous-bandes, ce qui correspond à p=6 ou 7.

La fonction de « ou exclusif » permet la mise en oeuvre du mécanisme de substitution bit-à-bit nécessaire dans un schéma de chiffrement à flot.

Des avantages de l'opération « OU EXCLUSIF » pour implémenter la fonction de substitution bit-à-bit sont sa facilité et rapidité d'implémentation.

Selon un autre aspect de l'invention, la clé de chiffrement est calculée à partir d'un générateur pseudo-aléatoire paramétré par une clé de taille fixe partagée entre l'équipement noeud émetteur et l'équipement noeud destinataire

Le générateur pseudo-aléatoire paramétré par une clé sécrète de taille fixe partagée entre l'émetteur et le récepteur Cette clé de taille fixe permet de créer la première clé de chiffrement, secrète elle aussi, mais de longueur beaucoup plus importante.

L'invention concerne aussi un procédé de traitement d'un paquet de données reçu par un équipement noeud récepteur d'un réseau de communication par voie radio, ledit paquet de données ayant été émis par un équipement noeud émetteur à destination d'un équipement noeud destinataire comme une succession de formes d'ondes émises à des positions définies par des codes de sauts, lesdites positions pouvant être temporelles ou fréquentielles.

Selon l'invention, ledit procédé comprend les étapes suivantes, mises en oeuvre pour chaque forme d'onde reçue :

- Prédiction d'une première position de réception d'un bit de valeur 0 et d'une deuxième position de réception d'un bit de valeur 1, par calcul d'un premier et d'un deuxième code de saut au moins en fonction d'une clé de chiffrement partagée avec l'équipement noeud émetteur ;
- Détection d'une première et deuxième quantité d'énergie reçues aux première et deuxième positions prédites ; et
- Décision sur la valeur du bit correspondant à la forme d'onde reçue, par comparaison des énergies détectées aux premier et deuxième positions prédites.

Un tel procédé est destiné à être mis en oeuvre par un équipement noeud lors de la réception d'un paquet de données dans le réseau.

Avec l'invention, l'équipement noeud récepteur destinataire du paquet de données est capable de générer la même clé de chiffrement que celle utilisée par l'équipement noeud émetteur. Il peut donc prédire les deux positions possibles de la forme d'onde émise par l'émetteur et choisir la plus probable en comparant les quantités d'énergies détectées à ces positions.

Selon un aspect de l'invention, le procédé de traitement d'un paquet de données reçu comprend une étape préalable de mise en correspondance des valeurs de bits possibles avec un mot de code de p bits, p entier non nul, selon une table de correspondance partagée avec l'équipement noeud émetteur et l'étape de prédiction comprend une addition bit à bit de type « ou exclusif » du mot de code correspondant à une valeur de bit possible et de la clé de chiffrement, dont le résultat correspond au code de saut calculé.

Le noeud destinataire partage aussi avec le noeud émetteur une table de correspondance des valeurs binaires de l'information à transmettre avec des mots de codes de longueur p, p étant un entier non nul. S'il est le destinataire du paquet, le noeud récepteur peut ainsi prédire les positions de la forme d'onde reçue en calculant les deux valeurs possibles du code de saut, de façon similaire à celle du noeud émetteur, en fonction des valeurs possibles du bit de données et la clé de chiffrement.

On notera que, pour un récepteur à saut fréquentiel classique basé sur la détection d'énergie, la mise en oeuvre du procédé de traitement d'un paquet de données reçu selon l'invention nécessite que l'équipement noeud récepteur possède un circuit de réception comportant deux synthétiseurs de fréquence.

L'invention concerne aussi un dispositif de traitement d'un paquet de données avant son émission dans un réseau de communications par voie radio apte à mettre en oeuvre le procédé de traitement avant émission selon l'invention, qui vient d'être décrit.

L'invention concerne aussi un dispositif de traitement d'un paquet de données reçu par un équipement noeud récepteur, ledit dispositif étant apte à mettre en oeuvre le procédé de réception selon l'invention.

L'invention concerne aussi un équipement noeud d'un réseau de communication radio, apte à émettre et à recevoir des paquets de données sous la forme de succession de formes d'ondes émises à des positions définies par des codes de sauts.

Selon l'invention, un tel équipement comprend un dispositif de traitement d'un paquet de données avant son émission selon l'invention et un dispositif de traitement d'un paquet de données reçu selon l'invention.

L'invention concerne aussi un système de communication par voie radio, comprenant une pluralité d'équipements noeuds selon l'invention.

L'invention concerne encore un programme d'ordinateur comportant des instructions pour la mise en oeuvre d'un procédé de traitement d'un paquet de données avant son émission dans le réseau tel que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

L'invention concerne enfin un programme d'ordinateur comportant des instructions pour la mise en oeuvre d'un procédé de traitement d'un paquet de données reçu par un équipement noeud récepteur tel que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

#### 4. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure 1 présente de façon schématique un système de communication par radio impulsionnelle utilisant un code de saut temporel selon l'invention;
- la figure 2 présente de façon schématique la structure d'un temps symbole selon une technique radio impulsionnelle utilisant un code de saut temporel ;
- la figure 3 présente les étapes du procédé de traitement d'un paquet de données avant son émission dans un tel réseau, selon l'invention ;
- la figure 4 présente les étapes du procédé de traitement d'un paquet de données avant son émission, selon un mode de réalisation particulier de l'invention ;
- la figure 5 présente un exemple de génération d'une clé de chiffrement par un générateur pseudo aléatoire selon l'invention;
- la figure 6 présente les étapes du procédé de traitement d'un paquet de données reçu par un équipement noeud d'un tel réseau selon l'invention ;
- la figure 7 présente les étapes du procédé de traitement d'un paquet de données reçu selon un mode de réalisation particulier de l'invention ; et
- la figure 8 présente de façon schématique la structure d'un équipement noeud selon l'invention.

#### 5. Description d'un mode de réalisation particulier de l'invention

Dans la suite de la description, on considère à titre d'exemple de réalisation de l'invention, un canal de communication par radio impulsionnelle utilisant un code de saut temporel. Bien sûr, l'invention n'est pas limitée à la radio impulsionnelle, mais s'applique tout aussi bien à un canal de communication par saut fréquentiel.

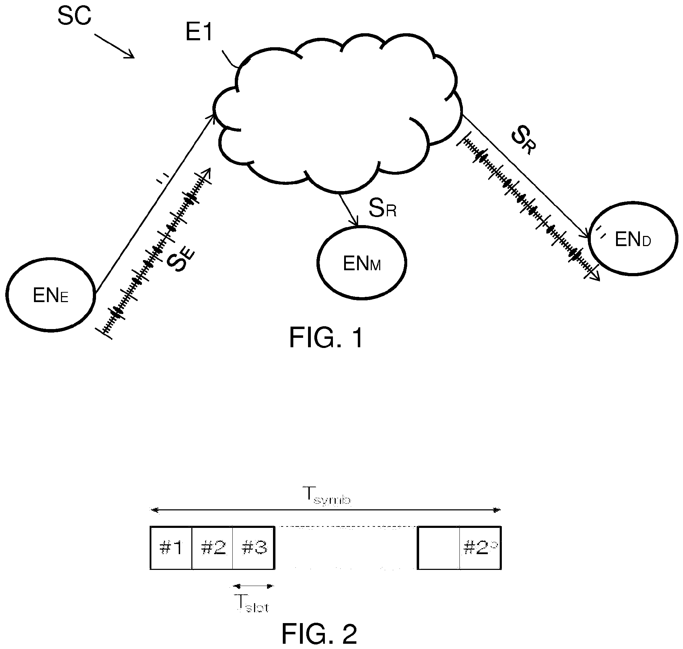

En relation avec la Figure **1**, on considère un système de communication radio SC comprenant des équipements noeuds aptes à échanger des paquets de données sur un réseau RRI de communication par radio impulsionnelle utilisant une technique de saut temporel. Un équipement noeud $EN_E$ de ce réseau, dit noeud émetteur, émet un paquet de données $DP_E$ sous la forme d'un signal radio $S_E$ sur un canal de transmission de ce réseau, à destination d'un équipement noeud destinataire $EN_D$. Le paquet de données $DP_E$ comprend une série de bits d'informations.

Selon la technique de saut temporel, connue de l'homme de métier, chaque bit d'informations de la série est transmis sous la forme d'au moins un symbole au moyen d'un groupement ou burst B d'impulsions. Dans la suite de la description, on désigne par $b_n$ le bit d'information courant à transmettre.

On a représenté un équipement noeud malicieux $EN_M$ pour mettre en évidence le fait que, au même titre qu'un équipement noeud légitime, il écoute le trafic sur un ou plusieurs canaux de transmission du réseau RRI. Selon le type d'attaque utilisée, un tel noeud écoute le canal de transmission pour intercepter les informations transmises entre les noeuds légitimes $EN_E$ et $EN_D$, ou bien brouille selon une technique de « jamming » la communication légitime entre $EN_E$ et $EN_D$, afin de bloquer la communication ou encore retransmet des informations interceptés sous forme de paquets de données malicieux afin de rendre inopérants ces équipements noeuds légitimes (attaque de type « DoS »).

En relation avec la Figure **2**, on présente le principe de l'émission de symboles portés par un groupement d'impulsions B. Chaque symbole est émis dans un intervalle de temps appelé $T_{symb}$, découpé en $2^p$ sous-intervalles appelés *slots* de durée $T_{slot}$, avec p entier non nul.

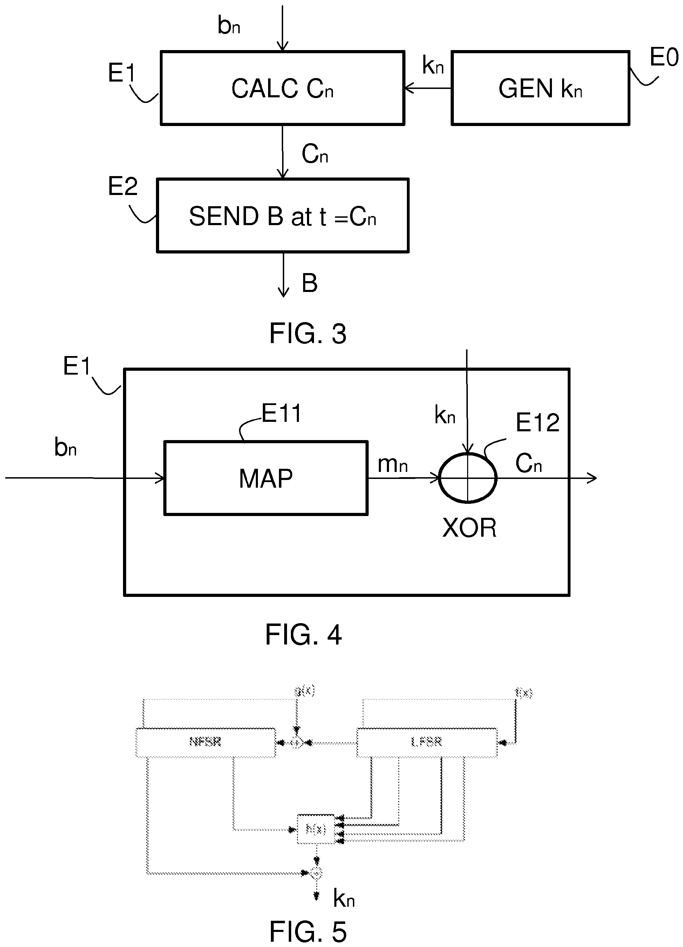

Selon l'invention, les bits $b_n$, avec n entier compris entre 0 et N-1, de la série de bits constituant le paquet de données $DP_E$ sont successivement traités, au niveau de l'équipement noeud émetteur $EN_E$ par le procédé d'émission, qui va maintenant être décrit en relation avec la Figure **3**.

Dans une première étape E1, un code de saut temporel $C_n$ est calculé pour le bit d'informations courant $b_n$, en fonction de la valeur de ce bit courant et de la valeur $k_n$ d'une clé de chiffrement préalablement générée au cours d'une étape E0 par un générateur pseudo-aléatoire.

Selon l'invention, la clé de chiffrement $k_n$ a une longueur du même ordre de grandeur que la série de bits d'informations formant le paquet de données $DP_E$

De façon avantageuse, la clé de chiffrement $k_n$ est générée à partir d'un générateur pseudo-aléatoire, paramétré par une clé de taille fixe partagée entre le noeud émetteur et le noeud récepteur. Un exemple d'architecture d'un générateur d'une telle clé sera présentée plus avant en relation avec la Figure **5**.

Dans une étape E2, un burst B d'impulsions est émis sur le canal de transmission radio dans un sous-intervalle du temps symbole défini par le code de saut temporel $C_n$ calculé.

Les étapes E0, E1 et E2 sont itérées pour chaque bit d'informations du paquet de données.

On notera que le même burst B d'impulsions est utilisé pour transmettre les valeurs des bits d'informations $b_n$ formant le paquet de données, sans recours à aucune modulation.

On présente maintenant, en relation avec la Figure **4**, un exemple de mise en oeuvre du procédé de traitement d'un paquet de données avant son émission selon un mode de réalisation particulier de l'invention.

Dans cet exemple de réalisation, l'étape E1 comprend une sous-étape E11 de mise en correspondance (« mapping », en anglais) du bit d'information $b_n$ avec un mot de code $m_n$ de p bits, p entier non nul, dont la valeur dépend du bit d'entrée $b_n$, selon une table de correspondance que le noeud émetteur partage avec le noeud destinataire.

On notera que cette table n'est pas nécessairement secrète et qu'elle peut même être publique.

Dans une sous-étape E12, ce mot de code de p bits subit une opération de XOR, représentée par la notation $\oplus$, avec un mot de p bits, extrait de la clé de chiffrement $k_n$.

On comprend que, dans cet exemple de réalisation, la clé de chiffrement $k_n$ est une clé de chiffrement à flots comprenant p bits, qui présente donc la même longueur que le mode de code $m_n$.

Le résultat de l'opération de XOR indique le numéro du slot $C_n$ dans lequel le burst d'impulsions B sera émis.

Dans la suite, on considère l'exemple particulier d'un mode de code de longueur p=4. Le code de saut $C_n$ peut donc prendre $2^4$= 16 valeurs.

Pour un code de saut temporel, ces 16 valeurs correspondent chacune à un numéro de slot possibles pour le code de saut $C_n$. Dans le cas d'un code de saut fréquentiel, ces 16 valeurs possibles correspondent chacune à une fréquence ou sous-bande d'émission de la forme d'onde.

Pour p=4, la fonction de mise en correspondance entre le bit courant $b_n$ et un mode de code $m_n$ peut être la suivante :

$$b_n = 0 \rightarrow m_n = 0101 \; ;$$

$$b_n = 1 \rightarrow m_n = 1010.$$

Grâce à l'utilisation de la clé de chiffrement à la volée, clé privée partagée entre l'émetteur et le récepteur, les bits d'informations ne sont plus émises en clair et peuvent être transmises sans recourir à un schéma de modulation particulier. Contrairement à l'art antérieur qui, par exemple, utilise une modulation PPM, cette émission engendre une faible probabilité d'exploitation du burst éventuellement intercepté.

La Figure **5** présente un exemple d'architecture d'un générateur de clé de chiffrement à flot mise en oeuvre au cours de l'étape E0 du procédé de traitement avant émission selon l'invention. Cette architecture s'appuie sur une technique connue de l'art antérieur, décrite dans le document intitulé "Grain- A Stream Cipher for Constrained Environments", par les auteurs M. Hell, T. Johanson et T. Meier, eSTREAM, ECRYPT Stream Cipher Project, Report 2005/010 (2005). Selon cette technique, la génération de la clé de chiffrement kn est basée sur un registre à décalage linéaire (« Linear Feedback Shift Register » ou LFSR, en anglais) et un registre à décalage non linéaire (« Non-linear Feedback Shift Register » ou NFSR, en anglais) et une fonction booléenne h(x). Sur cette figure, f(x) et g(x) représentent respectivement les polynômes caractéristiques du registre à décalage linéaire LFSR et du registre à décalage non linéaire NFSR Ce générateur permet la création d'une clé de chiffrement $k_n$ satisfaisant certaines propriétés de sécurité à partir d'une clé initiale de taille fixe. Cette dernière détermine l'état initial du LFSR et du NFSR.

Le procédé d'émission qui vient d'être décrit est mis en oeuvre par un dispositif d'émission d'un paquet de données selon l'invention. De façon avantageuse, ce dernier est intégré dans un équipement noeud d'un réseau de communications par radio impulsionnelle ou par saut fréquentiel.

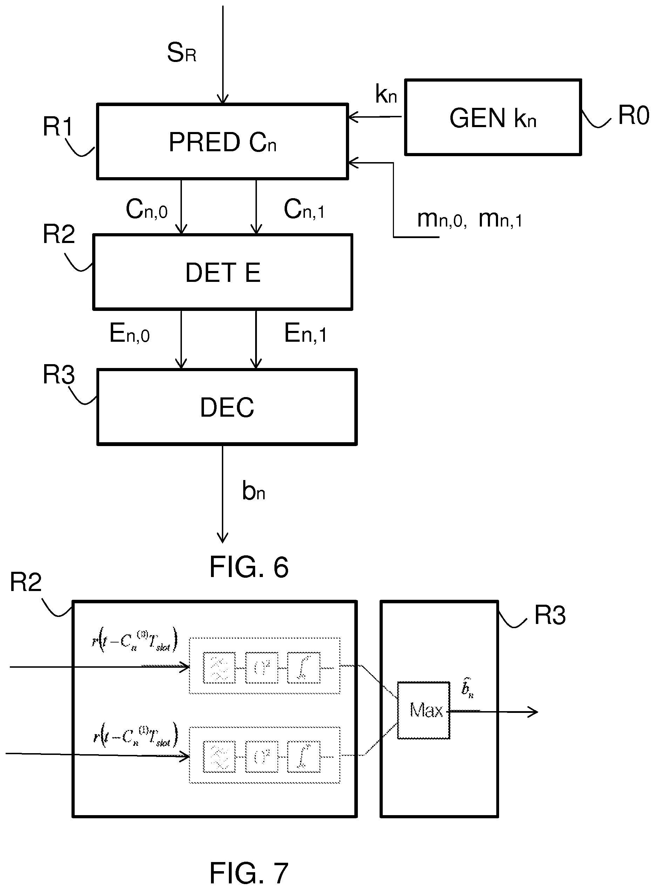

On présente maintenant, en relation avec la figure **6**, un exemple de réalisation du procédé de traitement d'un paquet de données $DP_R$ reçu dans un réseau de communications par voie radio impulsionnelle utilisant un code de saut temporel selon l'invention.

Le paquet de données $DP_R$ est reçu sous la forme d'un signal radio $S_R$ comprenant des groupements d'impulsions B à des instants temporels définis par des codes de sauts temporels $C_n$ calculés par le noeud émetteur.

Dans une première étape $R_0$, une clé de chiffrement $k'_n$ est générée, en vue de la réception d'un bit $b'_n$ du paquet de données $DP_R$. Si le noeud récepteur $EN_D$ est le destinataire légitime du paquet de données, il est apte à mettre générer la même clé de chiffrement $k'_n = k_n$ que le noeud émetteur $EN_E$.

Si au contraire, il est un équipement noeud malicieux $EN_M$, il ne dispose pas de moyens de génération d'une clé de chiffrement analogue à celle utilisée par le noeud émetteur.

A l'issue de cette étape, on considère que la clé de chiffrement $k_n$ est connue du noeud récepteur.

Au cours d'une étape R1, les valeurs possibles des codes de saut temporel utilisés par l'équipement noeud émetteur sont prédites à partir de la clé de chif-

frement $k_n$.

Selon un mode de réalisation particulier de l'invention, un mot de code $m_n$ de longueur p a été associé par le noeud émetteur à la valeur binaire du bit d'information $b_n$ à transmettre. Dans ce cas, le noeud destinataire connaît également la table de correspondance entre bit d'information et mot de code de p bits. A l'aide de cette table, il applique la fonction de mise en correspondance pour prédire la position de la forme d'onde correspondant à un bit $b_n$ de valeur 1 et d'un bit $b_n$ de valeur 0, à partir des valeurs calculées de codes de sauts temporels.

Ainsi, pour le bit n, le récepteur calcule :

$$\begin{cases} C_{n,0} = k_n \oplus m_{n,0} \\ C_{n,1} = k_n \oplus m_{n,1} \end{cases}$$

Dans une étape R2, une quantité d'énergie $E_{n,0}$ associée à l'emplacement correspondant au code de saut temporel $C_{n,0}$ dans le signal $S_R$ reçu et une quantité d'énergie $E_{n,1}$ associée à l'emplacement correspondant au code de saut temporel $C_{n,1}$ sont détectées.

Dans une étape R3, une décision est prise sur l'emplacement temporel ou slot le plus probable, en comparant les quantités d'énergie $E_{n,0}$ et $E_{n,1}$ détectées et en choisissant celui correspondant à la quantité d'énergie la plus élevée, comme illustré par la figure **7**.

On comprend qu'un noeud malicieux $EN_M$, qui a priori ne connaît pas la clé de chiffrement, ne sera pas en mesure de reproduire le procédé de réception selon l'invention.

En effet, il ne saura pas d'une part prédire les instants d'émission des bursts d'impulsion, ce qui l'empêchera notamment de brouiller les informations transmises par le noeud émetteur sur le canal de transmission. D'autre part, l'absence de modulation des bursts d'impulsion transmis engendre une faible probabilité d'exploitation des impulsions qu'il aura pu éventuellement intercepter.

Le procédé de traitement d'un paquet de données reçu, qui vient d'être décrit est mis en oeuvre par un dispositif de traitement d'un paquet de données reçu, selon l'invention. De façon avantageuse, ce dernier est intégré dans un équipement noeud d'un réseau de communications par radio iutilisant un code de saut.

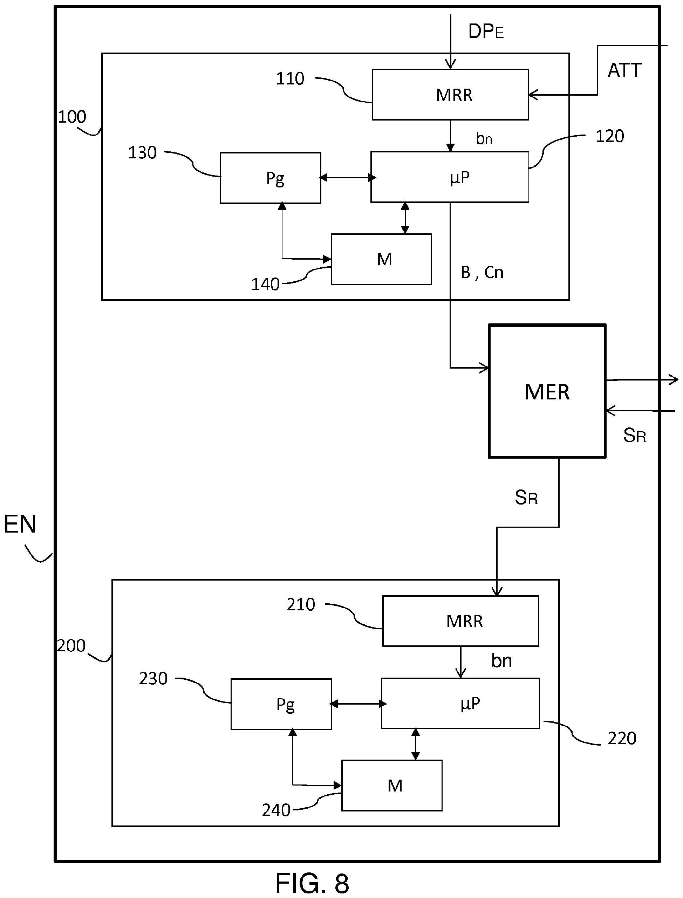

En relation avec la **figure 8**, on présente maintenant un exemple de structure d'un équipement noeud EN selon l'invention.

Selon un premier aspect de l'invention, cet équipement noeud EN comprend un dispositif 100 de traitement d'un paquet de données $DP_E$ avant son émission dans un réseau de communication par radio RRI utilisant un code de saut.

Le dispositif de traitement 100 selon l'invention comprend un module de réception 110 apte à recevoir un paquet de données $DP_E$ que l'équipement noeud EN prévoit d'émettre à destination d'au moins un autre équipement noeud, dit équipement noeud destinataire $EN_D$ du réseau RRI. Le paquet de données $DP_E$ est traité par une unité de traitement 120 équipée d'un microprocesseur apte à mettre en oeuvre, pour chaque bit d'information $b_n$ de ce paquet, les moyens constitutifs de l'invention, en particulier, des moyens de génération d'une clé de chiffrement $k_n$, des moyens de calcul d'un code de saut $C_n$ à partir de la valeur du bit d'informations $b_n$ et de la clé de chiffrement générée et des moyens de commande d'émission d'une forme d'onde à la position définie par le code de saut calculé, à un module d'émission réception radio MER de l'équipement noeud EN.

Dans le cas d'une technique de communication par voie radio impulsionnelle, la forme d'onde est un groupement d'impulsions qui va être émis à un instant défini par la valeur calculée du code de saut temporel.

Dans le cas d'une technique de communication par saut-fréquentiel, la forme d'onde est émise sur une sous-bande de fréquence définie par la valeur calculée du code de saut fréquentiel.

Le dispositif de traitement 100 selon l'invention comprend en outre une mémoire 140 dans laquelle est stockée un programme d'ordinateur 130 mettant en oeuvre les étapes du procédé de traitement d'un paquet de données avant son émission selon l'invention, qui vient d'être décrit de façon détaillée, en relation avec les figures 3 et 4. A l'initialisation, les instructions de code du programme d'ordinateur 130 sont par exemple chargées dans une mémoire RAM avant d'être exécutées par le processeur de l'unité de traitement 120.

Dans un mode de réalisation particulier de l'invention, la mémoire 140 comprend en outre des registres à décalage linéaire et non linéaire destinés à être utilisés par les moyens de génération d'une clé de chiffrement selon un schéma de chiffrement à flots.

Selon un aspect de l'invention, elle comprend en outre la table de correspondance entre les valeurs possibles d'un bit d'information et des mots de code de p bits, qui est partagée par l'équipement noeud émetteur et l'équipement noeud destinataire.

Selon un deuxième aspect de l'invention, cet équipement noeud EN comprend en outre un dispositif 200 de traitement d'un paquet de données reçu en provenance d'un équipement noeud émetteur $EN_E$.

Le dispositif de traitement 200 selon l'invention comprend un module de réception 210 apte à recevoir un paquet de données $DP_R$ reçu par le module d'émission/réception radio EMR de l'équipement noeud EN sur un canal de transmission du réseau RRI. Un tel paquet est reçu sous la forme d'un signal reçu $S_R$ comprenant des formes d'ondes positionnées selon des codes de saut calculés par l'équipement noeud émetteur. Dans le cas d'une communication par voie radio impulsionnelle, les formes d'onde sont des bursts d'impulsions B positionnés à des instants définis par des codes de saut temporel calculés par le noeud émetteur. Dans le cas d'une communication par saut fréquentiel, les formes d'onde sont positionnées sur des sous-bandes définies par des codes de saut fréquentiel calculés par le noeud émetteur.

Le signal reçu $S_R$ est traité par une unité de traitement 220 équipée d'un microprocesseur apte à mettre en oeuvre les moyens constitutifs de l'invention, en particulier, des moyens de génération d'une clé de chiffrement à l'aide d'un générateur pseudo aléatoire analogue à celui du noeud émetteur, des moyens de prédiction des deux positions possibles de la forme d'onde dans le signal reçu SR, pour un bit $b_n$ du paquet de données reçu, à partir de la clé de chiffrement générée, des moyens de détection d'une quantité d'énergie associée à chaque emplacement possible et des moyens de décision de l'emplacement le plus probable à partir des quantités d'énergie détectées.

Le dispositif de traitement 200 comprend outre une mémoire 240 dans laquelle est stockée un programme d'ordinateur 230 mettant en oeuvre les étapes du procédé de traitement à la réception selon l'invention, qui vient d'être décrit de façon détaillée, en relation avec les figures 6 et 7. A l'initialisation, les instructions de code du programme d'ordinateur 230 sont par exemple chargées dans une mémoire RAM avant d'être exécutées par le processeur de l'unité de traitement 220.

On notera que dans le cas d'une communication par saut fréquentiel, un équipement noeud comprenant un dispositif de traitement 200 selon l'invention, comprend nécessairement un circuit de réception à deux synthétiseurs de fréquence, ce qui lui permet de détecter simultanément les énergies associées à deux formes d'ondes dans des bandes de fréquences différentes.

Un système de traitement de paquets de données transmis dans un réseau de communications par voie radio selon l'invention, comprend au moins deux équipements noeuds tels que l'équipement noeud EN qui vient d'être décrit.

**Revendications**

**1.** Procédé de traitement d'un paquet de données avant son émission dans un réseau de communication radio par une succession de formes d'ondes émises à des positions définie par des codes de sauts, lesdites positions pouvant être temporelles ou fréquentielles, le paquet étant émis sur un canal de communication du réseau par un noeud émetteur à destination d'un noeud destinataire, le procédé étant **caractérisé en ce qu'**il comprend les étapes suivantes, mises en oeuvre pour chaque bit ($b_n$) du paquet de données à transmettre, dit bit courant :

- calcul (E1) d'un code de saut ($C_n$) au moins en fonction de la valeur du bit courant et d'une clé de chiffrement ($k_n$) générée à partir d'un générateur pseudo-aléatoire, la clé de chiffrement ayant une taille supérieure à la taille maximale d'un paquet de données transmis sur le canal ;
- commande (E2) d'émission d'une forme d'onde à la position définie par le code de saut calculé, la forme d'onde émise étant identique, quelle que soit la valeur du bit courant.

**2.** Procédé de traitement d'un paquet de données avant son émission selon la revendication 1, **caractérisé en ce que**, le nombre de positions possibles pour la forme d'onde étant égal à $2^p$, avec p entier non nul, ledit procédé comprend une étape préalable (E11) de mise en correspondance du bit courant avec un mot de code ($m_n$) de p bits, selon une table de correspondance partagée avec l'équipement noeud destinataire, et **en ce que** l'étape de calcul comprend une addition bit à bit (E12) de type « ou exclusif » du mot de code correspondant au bit à transmettre et de la clé de chiffrement, de même longueur p que le mot de code du bit courant, dont le résultat correspond au code de saut calculé.

**3.** Procédé de traitement d'un paquet de données avant son émission selon la revendication 2, **caractérisé en ce que** la clé de chiffrement ($k_n$) est calculée à partir d'un générateur pseudo-aléatoire paramétré par une clé de taille fixe partagée entre le noeud émetteur et le noeud destinataire.

**4.** Procédé de traitement d'un paquet de données reçu par un équipement noeud récepteur d'un réseau de communication par voie radio, ledit paquet de données ayant été émis par un équipement noeud émetteur à destination d'un équipement noeud destinataire par une succession de formes d'ondes émises à des positions définies par des codes de sauts, lesdites positions pouvant être temporelles ou fréquentielles, **caractérisé en ce que**, ledit procédé comprend les étapes suivantes, mises en oeuvre pour chaque forme d'onde reçue par un équipement noeud récepteur :

- Prédiction (R1) d'une première position de réception d'un bit de valeur 0 et d'une deuxième position de réception d'un bit de valeur 1, par calcul d'un premier et d'un deuxième code de saut au moins en fonction d'une clé de chiffrement générée à partir d'un générateur pseudo-aléatoire et partagée avec l'équipement noeud émetteur et respectivement de la valeur 0 ou 1 du bit;
- Détection (R2) d'une première et deuxième quantité d'énergie ($E_{n,0}$, $E_{n,1}$) reçues aux première et deuxième positions prédites ; et
- Décision (R3) sur la valeur du bit correspondant à la forme d'onde reçue, par comparaison des énergies détectées aux premier et deuxième positions prédites.

**5.** Procédé de traitement d'un paquet de données selon la revendication **4**, **caractérisé en ce qu'**il comprend une étape préalable de mise en correspondance des valeurs de bits possibles avec un mot de code de p bits selon une table de correspondance partagée avec l'équipement noeud émetteur, p entier non nul, et **en ce que** l'étape de prédiction comprend une addition bit à bit de type « ou exclusif » du mot de code correspondant à une valeur de bit possible et de la clé de chiffrement, dont le résultat correspond au code de saut calculé.

6. Dispositif de traitement (100) d'un paquet de données avant son émission dans un réseau de communication radio sous la forme d'une successions de formes d'ondes émises à des positions définies par des codes de saut temporel, lesdites positions pouvant être temporelles ou fréquentielles, le paquet étant émis sur un canal de communication du réseau par un noeud émetteur à destination d'un noeud destinataire, le dispositif étant **caractérisé en ce qu'**il comprend les moyens suivants, aptes à être mis en oeuvre pour chaque bit d'un mot de données du paquet de données à émettre, dit bit courant:

- génération d'une clé de chiffrement partagée entre le noeud émetteur et le noeud destinataire ;
- calcul d'un code de saut au moins en fonction du bit courant et de la clé de chiffrement ;
- commande d'émission d'une forme d'onde à une position définie par le code de saut calculé, la forme d'onde émise étant identique, quelle que soit la valeur du bit à transmettre.

7. Dispositif (200) de traitement d'un paquet de données reçu par un équipement noeud d'un réseau de communication par voie radio, ledit paquet de données ayant été émis par un équipement noeud émetteur à destination d'un équipement noeud destinataire sous la forme d'une succession de formes d'ondes à des positions définies par des codes de saut, **caractérisé en ce que**, pour une forme d'ondes reçue à une position donnée, ledit procédé comprend les étapes suivantes, mises en oeuvre pour chaque forme d'onde reçue :

- Prédiction d'une première position de réception d'un bit de valeur 0 et d'une deuxième position de réception d'un bit de valeur 1, par calcul d'un premier et d'un deuxième code de saut au moins en fonction d'une clé de chiffrement générée à partir d'un générateur pseudo-aléatoire et partagée avec l'équipement noeud émetteur et respectivement de la valeur 0 ou 1 du bit;
- Détection d'une première et deuxième quantité d'énergie reçues aux première et deuxième positions prédites ; et
- Décision sur la valeur du bit correspondant à la forme d'onde reçue, par comparaison des énergies détectées aux premier et deuxième positions prédites.

8. Equipement noeud (EN) d'un réseau de communication radio, apte à émmetre et à recevoir des paquets de données sous la forme de succession de formes d'ondes émises à des positions définies par des codes de sauts, **caractérisé en ce qu'**il comprend un dispositif de traitement d'un paquet de données avant son émission selon la revendication 6 et un dispositif de traitement d'un paquet de données reçu selon la revendication **7**.

9. Système de communication (SC) par voie radio, **caractérisé en ce qu'**il comprend une pluralité d'équipements noeuds selon la revendication **8**.

10. Programme d'ordinateur **caractérisé en ce qu'**il comprend des instructions pour la mise en oeuvre d'un procédé de traitement d'un paquet de données avant son émission selon la revendication **1**, lorsque ce programme est exécuté par un processeur.

11. Programme d'ordinateur **caractérisé en ce qu'**il comprend des instructions pour la mise en oeuvre d'un procédé de traitement d'un paquet de données reçu selon la revendication **4**, lorsque ce programme est exécuté par un processeur.

**Patentansprüche**

1. Verfahren zur Verarbeitung eines Datenpakets vor seinem Senden in einem Funkverbindungsnetz durch eine Folge von Wellenformen, die an durch Sprungcodes definierten Positionen gesendet werden, wobei die Positionen zeitlich oder frequentiell sein können, wobei das Paket auf einem Verbindungskanal des Netzes durch einen Sendeknoten an einen Zielknoten gesendet werden kann, wobei das Verfahren **dadurch gekennzeichnet ist, dass** es die folgenden Schritte enthält, die für jedes Bit ($b_n$), aktuelles Bit genannt, des zu übertragenden Datenpakets durchgeführt werden:

- Berechnung (E1) eines Sprungcodes ($C_n$) mindestens abhängig vom Wert des aktuellen Bits und von einem Chiffrierschlüssel ($k_n$), der ausgehend von einem Pseudo-Zufallsgenerator generiert wird, wobei der Chiffrierschlüssel eine größere Größe als die maximale Größe eines auf dem Kanal übertragenen Datenpakets hat;
- Steuerung (E2) des Sendens einer Wellenform an der durch den berechneten Sprungcode definierten Position, wobei die gesendete Wellenform gleich ist, unabhängig vom Wert des aktuellen Bits.

**2.** Verfahren zur Verarbeitung eines Datenpakets vor seinem Senden nach Anspruch 1, **dadurch gekennzeichnet, dass**, da die Anzahl von möglichen Positionen für die Wellenform gleich $2^p$ ist, mit p einer ganzen Zahl ungleich Null, das Verfahren einen vorhergehenden Schritt (E11) der Abstimmung des aktuellen Bits mit einem Codewort ($m_n$) von p Bits gemäß einer mit der Zielknotenausrüstung geteilten Abstimmungstabelle enthält, und dass der Rechenschritt eine Bit-für-Bit-Addition (E12) der Art "ODER EXKLUSIV" des Codeworts entsprechend dem zu übertragenden Bit und des Chiffrierschlüssels, gleicher Länge p wie das Codewort des aktuellen Bits, enthält, deren Ergebnis dem berechneten Sprungcode entspricht.

**3.** Verfahren zur Verarbeitung eines Datenpakets vor seinem Senden nach Anspruch 2, **dadurch gekennzeichnet, dass** der Chiffrierschlüssel ($k_n$) ausgehend von einem Pseudo-Zufallsgenerator berechnet wird, der durch einen Schlüssel feststehender Größe parametriert wird, der zwischen dem Sendeknoten und dem Zielknoten geteilt wird.

**4.** Verfahren zur Verarbeitung eines Datenpakets, das von einer Empfangsknotenausrüstung eines Verbindungsnetzes über Funk empfangen wird, wobei das Datenpaket von einer Sendeknotenausrüstung an eine Zielknotenausrüstung durch eine Folge von Wellenformen gesendet wurde, die an durch Sprungcodes definierten Positionen gesendet wurden, wobei die Positionen zeitlich oder frequentiell sein können, **dadurch gekennzeichnet, dass** das Verfahren die folgenden Schritte enthält, die für jede von einer Empfangsknotenausrüstung empfangene Wellenform durchgeführt werden:

- Vorhersage (R1) einer ersten Empfangsposition eines Bits des Werts 0 und einer zweiten Empfangsposition eines Bits des Werts 1, durch Berechnung eines ersten und eines zweiten Sprungcodes mindestens abhängig von einem Chiffrierschlüssel, der ausgehend von einem Pseudo-Zufallsgenerator generiert und mit der Sendeknotenausrüstung geteilt wird und je vom Wert 0 oder 1 des Bits;
- Erfassung (R2) einer ersten und zweiten Energiemenge ($E_{n,0}$, $E_{n,1}$), die an den ersten und zweiten vorhergesagten Positionen empfangen werden; und
- Entscheidung (R3) über den Wert des der empfangenen Wellenform entsprechenden Bits durch Vergleich der in den ersten und zweiten vorhergesagten Positionen erfassten Energien.

**5.** Verfahren zur Verarbeitung eines Datenpakets nach Anspruch 4, **dadurch gekennzeichnet, dass** es einen vorhergehenden Schritt des Abstimmung der Werte von möglichen Bits mit einem Codewort von p Bits gemäß einer Abstimmungstabelle enthält, die mit der Sendeknotenausrüstung geteilt wird, wobei p eine ganze Zahl ungleich Null ist, und dass der Vorhersageschritt eine Bit-für-Bit-Addition der Art "ODER EXKLUSIV" des Codeworts entsprechend einem möglichen Bitwert und des Chiffrierschlüssels enthält, deren Ergebnis dem berechneten Sprungcode entspricht.

**6.** Verarbeitungsvorrichtung (100) eines Datenpakets vor seinem Senden in einem Funkverbindungsnetz in Form einer Folge von Wellenformen, die an durch zeitliche Sprungcodes definierten Positionen gesendet werden, wobei die Positionen zeitlich oder frequentiell sein können, wobei das Paket auf einem Verbindungskanal von einem Sendeknoten an einen Zielknoten gesendet wird, wobei die Vorrichtung **dadurch gekennzeichnet ist, dass** sie die folgenden Einrichtungen enthält, die für jedes Bit eines Datenworts des zu sendenden Datenpakets, aktuelles Bit genannt, angewendet werden können:

- Generierung eines zwischen dem Sendeknoten und dem Zielknoten geteilten Chiffrierschlüssels;
- Berechnung eines Sprungcodes mindestens abhängig vom aktuellen Bit und vom Chiffrierschlüssel;
- Sendesteuerung einer Wellenform an einer durch den berechneten Sprungcode definierten Position, wobei die gesendete Wellenform gleich ist, unabhängig vom Wert des zu übertragenden Bits.

**7.** Verarbeitungsvorrichtung (200) eines von einer Knotenausrüstung eines Verbindungsnetzes über Funk empfangenen Datenpakets, wobei das Datenpaket von einer Sendeknotenausrüstung an eine Zielknotenausrüstung in Form einer Folge von Wellenformen an durch Sprungcodes definierten Positionen gesendet wurde, **dadurch gekennzeichnet, dass** für eine an einer gegebenen Position empfangene Wellenform das Verfahren die folgenden Schritte enthält, die für jede empfangene Wellenform durchgeführt werden:

- Vorhersage einer ersten Empfangsposition eines Bits des Werts 0 und einer zweiten Empfangsposition eines Bits des Werts 1, durch Berechnung eines ersten und eines zweiten Sprungcodes mindestens abhängig von einem Chiffrierschlüssel, der ausgehend von einem Pseudo-Zufallsgenerator generiert und mit der Sendeknotenausrüstung geteilt wird und je vom Wert 0 oder 1 des Bits;
- Erfassung einer ersten und einer zweiten Energiemenge, die an der ersten und der zweiten vorhergesagten Position empfangen werden; und
- Entscheidung über den Wert des der empfangenen Wellenform entsprechenden Bits durch Vergleich der an den ersten und zweiten vorhergesagten Positionen erfassten Energien.

8. Knotenausrüstung (EN) eines Funkverbindungsnetzes, das Datenpakete in Form einer Folge von Wellenformen, die an durch Sprungcodes definierten Positionen gesendet werden, senden und empfangen kann, **dadurch gekennzeichnet, dass** sie eine Verarbeitungsvorrichtung eines Datenpakets vor seinem Senden nach Anspruch 6 und eine Verarbeitungsvorrichtung eines empfangenen Datenpakets nach Anspruch 7 enthält.

9. Verbindungssystem (SC) über Funk, **dadurch gekennzeichnet, dass** es eine Vielzahl von Knotenausrüstungen nach Anspruch 8 enthält.

10. Computerprogramm, **dadurch gekennzeichnet, dass** es Anweisungen zur Durchführung eines Verarbeitungsverfahrens eines Datenpakets vor seinem Senden nach Anspruch 1 enthält, wenn dieses Programm von einem Prozessor ausgeführt wird.

11. Computerprogramm, **dadurch gekennzeichnet, dass** es Anweisungen zur Durchführung eines Verarbeitungsverfahrens eines empfangenen Datenpakets nach Anspruch 4 enthält, wenn dieses Programm von einem Prozessor ausgeführt wird.

**Claims**

1. Method for processing a data packet before transmission thereof in a radio communication network by a sequence of waveforms transmitted at positions defined by hop codes, said positions being able to be temporal or frequency positions, the packet being transmitted on a communication channel of the network by a transmitter node to a receiver node, the method being **characterized in that** it comprises the following steps, implemented for each bit ($b_n$) of the data packet to be transmitted, called current bit:

- calculating (E1) a hop code ($C_n$) at least on the basis of the value of the current bit and of an encryption key ($k_n$) generated using a pseudorandom generator, the encryption key having a size greater than the maximum size of a data packet transmitted on the channel;
- controlling (E2) the transmission of a waveform at the position defined by the calculated hop code, the transmitted waveform being identical regardless of the value of the current bit.

2. Method for processing a data packet before transmission thereof according to Claim 1, **characterized in that**, the number of possible positions for the waveform being equal to $2^p$, where p is a nonzero integer, said method comprises a preliminary step (E11) of matching the current bit with a code word ($m_n$) of p bits, using a correspondence table shared with the receiver node device, and **in that** the calculation step comprises a bit-by-bit addition (E12) of "exclusive or" type of the code word corresponding to the bit to be transmitted and of the encryption key, of the same length p as the code word of the current bit, the result of which corresponds to the calculated hop code.

3. Method for processing a data packet before transmission thereof according to Claim 2, **characterized in that** the encryption key ($k_n$) is calculated using a pseudorandom generator parameterized by a key of fixed size that is shared between the transmitter node and the receiver node.

4. Method for processing a data packet received by a receiver node device of a radio communication network, said data packet having been transmitted by a transmitter node device to a receiver node device by a sequence of waveforms transmitted at positions defined by hop codes, said positions being able to be temporal or frequency positions, **characterized in that** said method comprises the following steps, implemented for each waveform received by a receiver node device:

- predicting (R1) a first reception position of a bit of value 0 and a second reception position of a bit of value 1, by calculating a first and a second hop code at least on the basis of an encryption key generated using a pseudorandom generator and shared with the transmitter node device and respectively the value 0 or 1 of the bit;
- detecting (R2) a first and a second amount of power ($E_{n,0}$, $E_{n,1}$) received at the first and second predicted positions; and
- deciding (R3) as to the value of the bit corresponding to the received waveform, by comparing the powers detected at the first and second predicted positions.

5. Method for processing a data packet according to Claim 4, **characterized in that** it comprises a preliminary step of matching the possible bit values with a code word of p bits using a correspondence table shared with the transmitter node device, p being a nonzero integer, and **in that** the prediction step comprises a bit-by-bit addition of "exclusive or" type of the code word corresponding to a possible bit value and of the encryption key, the result of which corresponds to the calculated hop code.

**6.** Device (100) for processing a data packet before transmission thereof in a radio communication network in the form of a sequence of waveforms transmitted at positions defined by temporal hop codes, said positions being able to be temporal or frequency positions, the packet being transmitted on a communication channel of the network by a transmitter node to a receiver node, the device being **characterized in that** it comprises the following means, able to be implemented for each bit of a data word of the data packet to be transmitted, called current bit:

- generating an encryption key shared between the transmitter node and the receiver node;
- calculating a hop code at least on the basis of the current bit and of the encryption key;
- controlling the transmission of a waveform at a position defined by the calculated hop code, the transmitted waveform being identical regardless of the value of the bit to be transmitted.

**7.** Device (200) for processing a data packet received by a node device of a radio communication network, said data packet having been transmitted by a transmitter node device to a receiver node device in the form of a sequence of waveforms at positions defined by hop codes, **characterized in that**, for a waveform received at a given position, said method comprises the following steps, implemented for each received waveform:

- predicting a first reception position of a bit of value 0 and a second reception position of a bit of value 1, by calculating a first and a second hop code at least on the basis of an encryption key generated using a pseudorandom generator and shared with the transmitter node device and respectively the value 0 or 1 of the bit;
- detecting a first and a second amount of power received at the first and second predicted positions; and
- deciding as to the value of the bit corresponding to the received waveform, by comparing the powers detected at the first and second predicted positions.

**8.** Node device (EN) of a radio communication network, able to transmit and to receive data packets in the form of a sequence of waveforms transmitted at positions defined by hop codes, **characterized in that** it comprises a device for processing a data packet before transmission thereof according to Claim 6 and a device for processing a received data packet according to Claim 7.

**9.** Radio communication system (SC), **characterized in that** it comprises a plurality of node devices according to Claim 8.

**10.** Computer program, **characterized in that** it comprises instructions for implementing a method for processing a data packet before transmission thereof according to Claim 1 when this program is executed by a processor.

**11.** Computer program, **characterized in that** it comprises instructions for implementing a method for processing a received data packet according to Claim 4 when this program is executed by a processor.

FIG. 1

FIG. 2

FIG. 3

FIG. 4

FIG. 5

$S_R$

R1

PRED $C_n$

$k_n$

GEN $k_n$ — R0

$C_{n,0}$      $C_{n,1}$

R2

DET E

$m_{n,0}, \; m_{n,1}$

$E_{n,0}$      $E_{n,1}$

R3

DEC

$b_n$

## FIG. 6

R2

$r\left(t - C_n^{(0)} T_{slot}\right)$

$r\left(t - C_n^{(1)} T_{slot}\right)$

$|\cdot|^2$   $\int$

$|\cdot|^2$   $\int$

Max

$\tilde{b}_n$

R3

## FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008012688 A

**Littérature non-brevet citée dans la description**

- Multiple access with time-hopping impulse modulation. **SCHOLTZ, R.** proceedings de la conférence « Military Communications Conférence », en 1993, MILCOM '93, Conférence record 'Communications on the Move. IEEE, 11 Octobre 1993, vol. 2, 447-450

- **PENGYUAN YU et al.** Securing RFID with Ultra-wideband Modulation. *workshop on RFID security - RFIDSEC 2006,* 12 Juillet 2006
- **M. HELL ; T. JOHANSON ; T. MEIER.** Grain- A Stream Cipher for Constrained Environments. *eSTREAM, ECRYPT Stream Cipher Project,* 2005